Europäisches Patentamt

European Patent Office

Office européen des brevets

(19)

(11) Veröffentlichungsnummer: **0 205 155**
A2

(12) # EUROPÄISCHE PATENTANMELDUNG

(21) Anmeldenummer: 86107884.8

(22) Anmeldetag: 10.06.86

(51) Int. Cl.⁴: **C 04 B 30/02**

(30) Priorität: 12.06.85 DE 3520955

(43) Veröffentlichungstag der Anmeldung:
17.12.86 Patentblatt 86/51

(84) Benannte Vertragsstaaten:
AT BE CH DE FR GB IT LI NL SE

(71) Anmelder: WACKER-CHEMIE GMBH
Prinzregentenstrasse 22
D-8000 München 22(DE)

(72) Erfinder: Reisacher, Hannes, Dipl.-Ing. (FH)
Sailerstrasse 16
D-8960 Kempten(DE)

(72) Erfinder: Stohr, Günter, Dr. Dipl.-Chem.
Stuibenstrasse 14
D-8968 Durach(DE)

(72) Erfinder: Kratel, Günter, Dr. Dipl.-Chem.
Alpenblickstrasse 10
D-8968 Durach(DE)

(54) Katalysatorauspuff mit Wärmedämmung.

(57) Die Erfindung betrifft einen mit Abgaskatalysator ausgerüsteten Auspuff mit Wärmedämmung, wobei als Wärmedämmung ein mindestens einseitig kaschierter Formkörper aus verpresstem, mikroporösem, gehärtetem Wärmedämmaterial verwendet wird.

EP 0 205 155 A2

Croydon Printing Company Ltd.

W A C K E R - C H E M I E

G M B H

München,den 7.6.1985
Dr.Ra/rei 0205155

Wa 8449-S
=========

## Katalysatorauspuff mit Wärmedämmung

Die Erfindung betrifft einen Katalysatorauspuff mit Wärmedämmung.

Beim Betrieb eines Auspuffs, der mit einem Abgaskatalysator
ausgerüstet ist, treten im Inneren des Auspuffs Temperaturen
auf, die weit höher liegen, als dies beim Betrieb eines konventionellen Auspuffs der Fall ist. Es werden beim Betrieb von
Katalysatorauspuffen Temperaturen um 900°C gemessen. Ein derart überhitzter Auspuff birgt ein beträchtliches Gefahrenpotential, beispielsweise beim Betanken des Fahrzeugs oder beim
unbedachten Parken des Fahrzeugs an brandgefährdeten Orten.

Mit einem Katalysator ausgerüstete Auspuffe müssen deshalb
mit einer Wärmeisolierung ausgestattet werden, um sicher zu
stellen, daß die Außentemperatur des Auspuffs jedenfalls
nicht wesentlich über die konventioneller Auspuffe steigt.

An eine derartige Wärmeisolierung müssen hohe Anforderungen
gestellt werden, unter anderem,schon aus konstruktiven Gründen, hohe Wärmedämmeffizienz bei geringer Schichtdicke, hohe Temperaturbeständigkeit, mechanische Belastbarkeit und
Montagefreundlichkeit.

Die erfindungsgemäße Wärmedämmung wird den gestellten Anforderungen gerecht.

Gegenstand der Erfindung ist ein mit Katalysator ausgerüsteter Auspuff mit Wärmedämmung, der dadurch gekennzeichnet ist,
daß die Wärmedämmung ein mindestens einseitig kaschierter
Formkörper aus verpresstem, mikroporösem Wärmedämmaterial der folgenden Zusammensetzung ist:

     30 - 88,9 Gewichtsprozent feinteiliges Metalloxid
     10 - 50   Gewichtsprozent Trübungsmittel
      1 - 10   Gewichtsprozent Fasermaterial und
    0,1 -  5   Gewichtsprozent Härter.

Unter dem anspruchsgemäßen Ausdruck "mit Katalysator ausgestatteter Auspuff" sollen erfindungsgemäß alle Auspuffanlagen bzw. jene Teile einer Auspuffanlage verstanden werden, die mit einem zur Abgasreinigung geeigneten Katalysator ausgestattet sind, insbesondere entsprechend ausgestattete Auspufftöpfe.

Die erfindungsgemäße Wärmeisolierung umhüllt den Auspuff, bzw. den Auspuffteil eng anliegend und ist mit einer Ummantelung gegen mechanische Zerstörung geschützt. Die Ummantelung wird dabei schon aus Gründen der Platzersparnis so konstruiert, daß der ummantelte Raum praktisch vollständig durch die erfindungsgemäße Wärmeisolierung ausgefüllt ist.

Die erfindungsgemäße Wärmedämmung wird als Formkörper ausgebildet, der mindestens einseitig kaschiert ist. Als Formkörper kommen grundsätzlich alle Formkörper in Betracht, die geeignet sind, den zu isolierenden Auspuff, bzw. den zu isolierenden Teil des Auspuffs, eng anliegend zu umhüllen. Es sind dies insbesondere platten- oder mattenförmige Formkörper, die eben sein können oder die äußere Form des zu isolierenden Auspuffs bereits mehr oder weniger genau abbilden.

Die Formkörper werden durch Verpressen des Wärmedämmaterials bei Enddrücken von 10 - 50 N /cm² hergestellt. Oftmals ist es zweckmäßig, das zunächst als loses Schüttmaterial vorliegende Wärmedämmaterial, gegebenenfalls unter Evakuieren vorzudichten, beispielsweise bei Drücken von etwa 0,1 bis 0,5 N /cm² und erst in einer zweiten Stufe unter den genannten Enddrücken zu verpressen. Die Preßtemperaturen liegen zumeist im Bereich der Umgebungstemperatur, also bei 15°
bis 30°C. Es können auch tiefere oder höhere Temperaturen angewendet werden. Es werden jedoch stets solche Temperaturen gewählt, bei denen noch keine Durchhärtung des Wärmedämmaterials
erfolgt. Da für eine Durchhärtung Temperaturen über 500°C erforderlich sind, kommt diesem Parameter in der Prxis keine Bedeutung bei. Die erfindungsgemäßen Wärmedämmformkörper werden
im ungehärteten Zustand montiert, da in diesem Zustand die
Formkörper eine für die Montage noch günstige Flexibilität besitzen. Die Aushärtung erfolgt beim Betrieb des Katalysatorauspuffs.

Als Kaschierung kommen grundsätzlich alle Materialien in Frage, mit denen bereits bisher Wärmedämmformkörper der erfindungsgemäßen Art kaschiert werden konnten. Es sind dies insbesondere Vliese oder Gewebe aus Aluminiumsilicat, Glasfaser,
Steinwolle, Cellulose, Metallfolie, insbesondere Aluminiumfolie, Pappe, Papier und andere. Die Kaschierung verleiht dem
ungehärteten Formkörper eine ausreichende mechanische Stabilität für Transport und Montage. Dieser Effekt wird nach der
Montage nicht mehr benötigt, sodaß auch solches Kaschiermaterial
in Frage kommt, das unter Betriebsbedingungen zerstört wird.

Die Verbindung zwischen Kaschiermaterial und verpresstem Wärmedämmaterial kann klebend oder nicht-klebend sein. Bei Materialien, wie Glasfaser und dgl., erfolgt bereits durch Anlegen von Druck und ohne Verwendung eines Klebers eine ausreichende mechanische Verzahnung des Wärmedämmaterials mit dem
Kaschiermaterial, insbesondere, wenn das Kaschiermaterial mit
der losen Schüttung des Wärmedämmaterials oder mit vorverdichtetem Wärmedämmaterial bei den oben genannten Enddrücken
verpresst wird.

Zumeist wird jedoch verklebt. Es können anorganische Kleber,
wie z.B. Kieselsole oder Wasserglas verwendet werden oder bekannte organische Kleber. Insbesondere kann auch Kaschiermaterial benützt werden, das bereits mit Kleber beschichtet ist.

Das erfindungsgemäß einzusetzende Wärmedämmaterial hat die folgende Zusammensetzung:

30 - 88,9    Gewichtsprozent feinteiliges Metalloxid
10 - 50      Gewichtsprozent Trübungmsittel
 1 - 10      Gewichtsprozent Fasermaterial und
0,1 - 5      Gewichtsprozent Härter.

Beispiele für feinteiliges Metalloxid sind pyrogen erzeugte Kieselsäuren, einschließlich Lichtbogenkieselsäuren, alkaliarme Fällungskieselsäuren, analog hergestelltes Aluminiumoxid, Titandioxid und Zirkondioxid. Vorzugsweise werden pyrogen erzeugte Metalloxide, einschließlich pyrogen erzeugter Mischoxide eingesetzt. Die feinteiligen Metalloxide weisen spezifische Oberflächen von 50 bis 700 m²/g, vorzugsweise 70 bis 400 m²/g auf.

Als Trübungsmittel kommen Ilmenit, Titandioxid, Siliciumcarbid, Eisen-II-Eisen-III-mischoxid, Chromdioxid, Zirkonoxid, Mangandioxid, sowie Eisenoxid in Betracht. Die Trübungsmittel weisen vorteilhafterweise ein Adsorptionsmaximum dem Infrarot-Bereich zwischen 1,5 und 10 µm auf.

Beispiele für Fasermaterial sind Glaswolle, Steinwolle, Schlackenwolle, keramische Fasern, wie sie aus Schmelzen von Aluminiumoxid und/oder Siliciumoxid gewonnen werden, Asbestfasern und andere.

Als Härter werden die Boride des Aluminiums, des Titans, des Zirkons, des Calciums, Silicide, wie Calciumsilicid, Eisensilicid und Calcium-aluminiumsilicid, insbesondere jedoch Borcarbid eingesetzt.

Die genannten Wärmedämmischungen werden durch einfaches Vermischen der Komponenten in der gewünschten Zusamemnsetzung gewonnen. Es können jedoch auch sogenannte agglomerierte Mischungen, insbesondere auf Basis von pyrogen erzeugter Kieselsäure eingesetzt werden. Hierbei wird in der Weise verfahren, daß das Trübungsmittel bereits beim Herstellungsprozeß der Kieselsäure, bei dem die Kieselsäure noch in Form der Primärteilchen vorliegt, kontinuierlich im angestrebten Mischungsverhältnis zugesetzt wird.

Die erfindungsgemäßen Wärmedämmformkörper weisen, einschließlich Kaschierung eine Schichtdicke von 3 - 10 mm, vorzugsweise 4 - 6 mm auf.

Mit Hilfe der erfindungsgemäßen Wärmedämmisolierung gelingt es, mit Abgaskatalysator ausgestattete Auspuffe herzustellen, bei denen das durch mögliche Überhitzung gegebene Gefahrenpotential beseitigt ist. Der Platzbedarf der erfindungsgemäßen Auspuffanlagen ist kaum höher, als der konventioneller Auspuffe. Der Aspekt der Volumenvergrößerung von mit Abgaskatalysatoren ausgerüsteten Auspuffen gegenüber konventionellen Auspuffen kann daher praktisch unberücksichtigt bleiben. Insbesondere ist es möglich, auch Altfahrzeuge, bei denen der genannte Aspekt naturgemäß nicht berücksichtigt wurde, mit den erfindungsgemäßen Auspuffanlagen umzurüsten.

Die Erfindung wird nun anhand eines Beispiels näher erläutert:

### Beispiel

Es wurde ein konventioneller Auspufftopf (Länge 50 cm, elliptischer Querschnitt 20 x 10 cm) mit einem einschließlich einseitiger Kaschierung 4 mm dicken Formkörper eng anliegend vollständig umhüllt und mit einer Ummantelung aus Stahlblech versehen, sodaß der ummantelte Raum praktisch vollständig von dem Formkörper ausgefüllt war.

Der Formkörper wies eine 1 mm starke Kaschierung aus Aluminiumsilicatvlies auf. Die Herstellung des Formkörpers erfolgte durch Verpressen einer Wärmedämmischung der folgenden Zusammensetzung:

> 62,5 Gewichtsprozent pyrogen erzeugte Kieselsäure
>
> 31,7 Gewichtsprozent Ilmenit
>
> 5,0 Gewichtsprozent Aluminiumsilicatfaser
>
> 0,8 Gewichtsprozent Borcarbid

mit dem Kaschiermaterial unter einem Enddruck von 30 Nm/cm² bei Umgebungstemperatur. Der Formkörper lag in Form einer ebenen Platte vor, die so flexibel war, daß der Auspufftopf ohne mechanische Zerstörung des Formkörpers umhüllt werden konnte. Der Formkörper wurde so montiert, daß die Kaschierung auf der kalten Seite angebracht war.

In die kreisförmige Öffnung des Auspuffs (Durchmesser 5 cm) wurde die Flamme eines Brenners gerichtet, um das Innere des Auspuffs auf eine Temperatur von 840°C zu erhitzen. Der Meßpunkt lag an der Innenwandung des Auspufftopfs im Abstand von 25 cm von der Auspufföffnung. Ein zweiter Meßpunkt lag an der Außenseite der Ummantelung genau gegenüber dem ersten Meßpunkt, sodaß die beiden Meßpunkte lediglich durch die Wärmeisolierung getrennt waren.

Am zweiten Meßpunkt ergab sich innerhalb von 10 Minuten eine Temperatur von 185°C. Die schnelle Erhitzung ist auf die exotherme Aushärtreaktion der Wärmedämmung zurückzuführen. Nach 30 Minuten wurde eine Temperatur von 190°C erreicht, die sich im Dauerbetrieb von zwei Stunden nicht mehr erhöhte. Die Messung wurde ohne Kühlung der Ummantelung durchgeführt, also ohne etwa die Kühlwirkung von Fahrtwind zu simulieren.

Es zeigte sich, daß ein erfindungsgemäß ausgerüsteter Katalysatorauspuff auch nach dem Abstellen des Fahrzeugs keine gegenüber konventionellen Auspuffen erhöhtes Gefahrenpotential infolge Überhitzung birgt.

0205155

Patentanspruch:

Mit Katalysator zur Abgasreinigung ausgerüsteter Auspuff mit Wärmedämmung, d a d u r c h  g e k e n n z e i c h n e t, daß die Wärmedämmung ein mindestens einseitig kaschierter Formkörper aus verpresstem, mikroporösem Wärmedämmaterial der folgenden Zusammensetzung ist:

|  |  |  |  |
|---|---|---|---|
| 30 | - | 80,9 | Gewichtsprozent feinteiliges Metalloxid |
| 10 | - | 50 | Gewichtsprozent Trübungsmittel |
| 1 | - | 10 | Gewichtsprozent Fasermaterial und |
| 0,1 | - | 5 | Gewichtsprozent Härter. |